# EUROPEAN PATENT APPLICATION

(11) **EP 1 531 390 A2**
(43) Date of publication of application: **18.05.2005**
(21) Application number: 04026638.9
(22) Date of filing: 10.11.2004
(51) Int. Cl.: G06F 9/38

(54) **Method and apparatus for controlling the execution of multiple threads in a parallel processor**

(30) Priority: 13.11.2003 US 714137
(71) Applicant: Infineon Technologies AG, 81669 München (DE)
(72) Inventor: Arnold, Roger, Sunnyvale CA 94087 (US); Ober, Robert E., San Jose CA 95126 (US)
(74) Representative: Repkow, Ines, Dr. Dipl.-Ing.

(57) **Abstract**

A multiple virtual processor (MVP) system using a special "YIELD" machine instruction inserted into a thread (virtual processor) at a selected point to trigger an immediate thread change (i.e., transfer of physical processor control to another thread). When the physical processor processes a YIELD instruction, the task thread surrenders control of the physical processor, and an otherwise idle thread is selected by a thread scheduling mechanism of the MVP system for loading into the physical processor. In one embodiment, the YIELD instruction includes an input operand that identifies the hardware signal on which the issuing thread intends to wait, and a result operand indicating the reason for reactivation.

## Description

### FIELD OF THE INVENTION

This invention relates to electronic systems that utilize multi-threaded processors, and more particularly to electronic systems that utilize multiple virtual processor systems.

### BACKGROUND OF THE INVENTION

Multiple processor systems include two or more physical processors, each physical processor being used to execute an assigned thread. In such systems, when the thread running on one of the physical processors has completed its assigned task, or has reached a state where it must wait for some condition or event before continuing, then the thread can execute a command that causes the associated physical processor to enter either a "sleep" mode or a "busy" loop. In the "sleep" mode, the physical processor suspends program instruction processing (but retains all settings and pipeline contents), and is "awakened" (i.e., resumes processing) upon receiving an associated hardware signal indicating that the waited-for condition or event has occurred. In a "busy" loop, the idling processor either polls for the waited for condition, or simply "spins" in a do-nothing loop until a hardware interrupt causes the idling processor to leave the "busy" loop.

While "sleep" mode and "busy" loop methods are suitable for multiple physical processor systems, these methods are inappropriate for multiple virtual processor (MVP) systems in which two or more threads execute serially on a single (shared) physical processor. In MVP systems, if an active virtual processor (i.e., the thread currently controlling the physical processor) were to place the shared physical processor into a "sleep" mode, then that virtual processor would suspend execution for all other idle virtual processors (i.e., threads currently not executing on the physical processor) as well. Similarly, if the active virtual processor were to enter a "busy" loop, it would be preventing other idle virtual processors from gaining access to the physical processor when it could otherwise be made available to them.

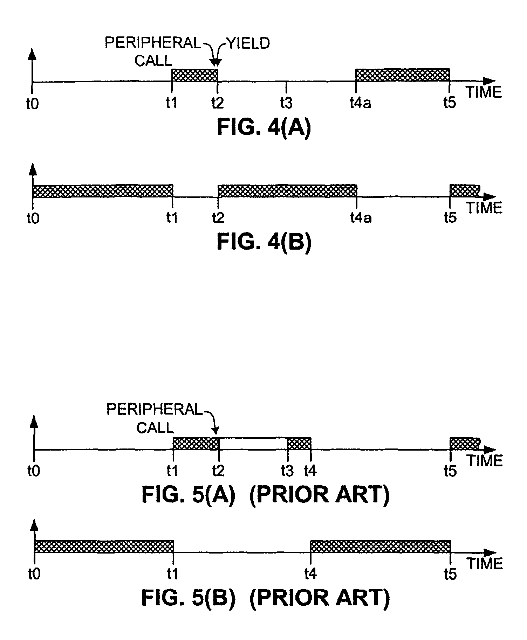

Although block multi-threading is well known as an academic concept, the present inventors are unaware of any prior commercial implementations of MVP systems. Published details on the experimental architectures that have been implemented do not appear to address the issue of how a virtual processor voluntarily relinquishes the physical processor to other virtual processors in MVP systems. Instead, the thread switching process in these experimental MVP systems is limited to thread switching using a predefined scheduling regime. For example, in MVP systems using a "round-robin" thread-switching regime, two or more virtual processors are alternately executed in a predefined order, each for a set period of time. This round-robin regime is depicted in Figs. 5(A) and 5(B), where Fig. 5(A) shows the activity of a first virtual processor and Fig. 5(B) shows the activity of a second virtual processor. In these figures, periods during which a virtual processor is executed (i.e., in control of the physical processor) are indicated by raised cross-hatching, and periods of inactive (i.e., when the virtual processors are "idle") are indicated using flat lines. For example, the second virtual processor is active between times t0 and t1 (as indicated in Fig. 5(B)), and the first virtual processor is idle during this period. At time t1, execution of the second virtual processor is suspended, and replaced by the first virtual processor, which remains in control of the physical processor between times t1 and t4. At time t4, the execution of the first virtual processor is suspended and control of the physical processor returns to the second virtual processor (as shown in Fig. 5(B)). Other scheduling regimes are also utilized, such as using a priority scheme that ranks available threads according to a predefined priority value, and then executes the highest priority thread until another thread achieves a higher priority. As with the round-robin scheduling regime, the priority scheme is performed at the operating system level.

A problem with the system-based thread scheduling techniques used in experimental MVP systems (e.g., the round-robin regime depicted in Figs. 5(A) and 5(B)) is that these scheduling regimes often continue executing a virtual processor (thread) even when the virtual processor is stalled, thereby wasting otherwise usable cycles of the physical processor. For example, Fig. 5(A) shows depicts a stall in the first virtual processor at time t2 (e.g., in response to a peripheral call that requires data to arrive from the peripheral before proceeding). This stall causes the physical processor to spin in a do-nothing loop until time t3, when the data is returned and execution of the first thread is able to resume. Accordingly, because of the round-robin scheduling regime, the physical processor remains assigned to the first virtual processor even though the first processor is stalled between times t2 and t3, thereby lowering overall processor efficiency.

What is needed is a method for operating MVP systems that removes a stalled virtual processor (thread) from contention for the physical processor in a user controlled (as opposed to system controlled) manner, and allows otherwise idle virtual processors to take exclusive control of the physical processor until a condition on the removed virtual processor is satisfied.

### SUMMARY

The present invention is directed to a method for operating MVP systems using a special machine instruction, referred to herein as "YIELD" instruction, that is selectively inserted by a user into one or more threads (virtual processors) at selected points of the thread execution, and triggers an immediate thread change (i.e., transfer of physical processor control to another thread). That is, upon processing a YIELD instruction during the execution of a task thread, the task thread surrenders control of the physical processor to an otherwise idle thread selected by a thread scheduling mechanism of the MVP system. The YIELD instruction thus facilitates increased processor efficiency by allowing a user to trigger a thread change at a known stall point, and by allowing the thread scheduling mechanism of the MVP system to determine the most efficient thread to execute when the thread change is triggered. For example, a user may place a YIELD instruction in a first thread at a point immediately after a peripheral call that requires a lengthy wait for return data. During execution of the first thread, upon processing the processor call and subsequent YIELD instruction, execution of the first thread is suspended (i.e., the first thread surrenders control of the physical processor), and an otherwise idle thread, which is selected by the thread scheduling mechanism according to a predefined scheduling regime, is loaded and executed by the physical processor. Thus, instead of tying up the physical processor during the otherwise lengthy wait for data to return from the polled peripheral, the physical processor productively executes the otherwise idle thread. Accordingly, the present invention provides a clean and efficient method for removing a stalled thread from contention for the physical processor in an MVP system, and allowing an otherwise idle thread selected by the thread scheduling mechanism of the MVP system to take exclusive control of the physical processor.

According to an embodiment of the present invention, a multi-threaded MVP system includes a processor core, a program memory for storing two or more threads, and two or more program counters for fetching instructions from the program memory, and for passing the fetched instructions to the processor core during execution of an associated task thread. The processor core includes a multiplexing circuit for selectively passing instructions associated with a selected task thread to a physical processor (pipeline) under the control of a thread scheduling mechanism. The thread scheduling mechanism identifies (selects) the active thread based on a predefined schedule (e.g., using round-robin or priority based regimes). In accordance with an aspect of the present invention, the processor core includes a mechanism that, upon processing a YIELD instruction in a currently-executing active thread, cooperates with the thread scheduling mechanism to suspend operation of (i.e., remove) the active thread from the physical processor, and to initiate the execution of an optimal second idle thread that is identified by the thread scheduling mechanism according to a predefined thread scheduling regime. That is, the YIELD instruction does not specify the otherwise idle thread to be executed, but defers the selection of the otherwise idle thread to the thread scheduling mechanism, thereby facilitating optimal use of the physical processor.

Various forms of the YIELD instruction are disclosed that vary depending on the nature and requirements of the MVP system in which the YIELD instruction is implemented. In one embodiment, the YIELD instruction includes an input operand that identifies the hardware signal on which the issuing thread intends to wait. When the thread is subsequently reactivated after executing of a YIELD instruction, a result operand can indicate the reason for reactivation. A zero result, for example, can indicate that reactivation is not due to the occurrence of a specific hardware signal, but rather that the hardware scheduler has reactivated the thread because it is once again that thread's turn to execute (in a round-robin scheduling regime), or because there is no higher priority thread that is ready to execute (in a priority scheduling regime). This result operand feature makes it possible to implement both "hard" and "soft" waits without requiring more than one form of YIELD instruction. A "hard" wait requires a specific hardware signal to end the wait; a "soft" wait, on the other hand, is simply a temporary, voluntary relinquishing of processor control, to give other threads a chance to execute. The result operand allows a single YIELD instruction, defined with soft wait semantics, to be used for hard waits as well. The issuing code simply tests the result from the YIELD instruction, and loops back to the YIELD instruction if it does not find the hardware signal indication for which it is looking.

In another embodiment, the YIELD instruction omits the input operand that identifies a hardware signal on which the thread intends to wait, and it omits the result operand as well. The YIELD instruction thus assumes that all waits are soft, which is indeed the case in some simple forms of block multi-threading.

The present invention will be more fully understood in view of the following description and drawings.

### BRIEF DESCRIPTION OF THE DRAWINGS

Fig. 1 is a simplified block diagram showing an MVP system according to an embodiment of the present invention;

Fig. 2 is a diagram showing a portion of an exemplary thread including a YIELD instruction that is executed by the multi-threaded MVP system of Fig. 1;

Fig. 3 is a flow diagram showing a method for operating the embedded processor system of Fig. 1 according to another embodiment of the present invention; and

Figs. 4(A) and 4(B) are simplified timing diagrams depicting the operation of the MVP system of Fig. 1 according to the method depicted in Fig. 3; and

Figs. 5(A) and 5(B) are simplified timing diagrams depicting the operation of a conventional multi-threaded system.

### DETAILED DESCRIPTION

The concepts of multi-threading and multiple virtual processing are known in the processor art, and generally refer to processor architectures that utilize a single physical processor to serially execute two or more "virtual processors". The term "virtual processor" refers to a discrete thread and physical processor operating state information associated with the thread. The term "thread" is well known in the processor art, and generally refers to a set of related machine (program) instructions (i.e., a computer or software program) that is executed by the physical processor. The operating state information associated with each virtual processor includes, for example, status flags and register states of the physical processor at a particular point in the thread execution. For example, an MVP system may include two virtual processors (i.e., two threads and two associated sets of operating state information). When a first virtual processor is executed, its associated operating state information is loaded into the physical processor, and then the program instructions of the associated thread are processed by the physical processor using this operating state information (note that the executed instructions typically update the operating state information). When the first virtual processor is subsequently replaced by the second virtual processor (herein referred to as a "thread change"), the current operating state information of the first virtual processor is stored in memory, then the operating state information associated with the second virtual processor is loaded into the physical processor, and then the thread associated with the second virtual processor is executed by the physical processor. Note that the stored operating state information associated with each virtual processor includes program counter values indicating the next instruction of the associated thread to be processed when execution of that virtual processor is resumed. For example, when execution the first virtual processor is subsequently resumed, the program counter information associated with the first virtual processor is used to fetch the next-to-be-processed instruction of the associated thread.

For brevity and clarity, the term "thread" is utilized interchangeably herein to refer to both actual threads (program instructions) and to virtual processors (i.e., the thread and related operating state information). For example, the phrase "thread change" is used herein to refer to replacing one virtual processor for another (i.e., both the threads and associated operating state information).

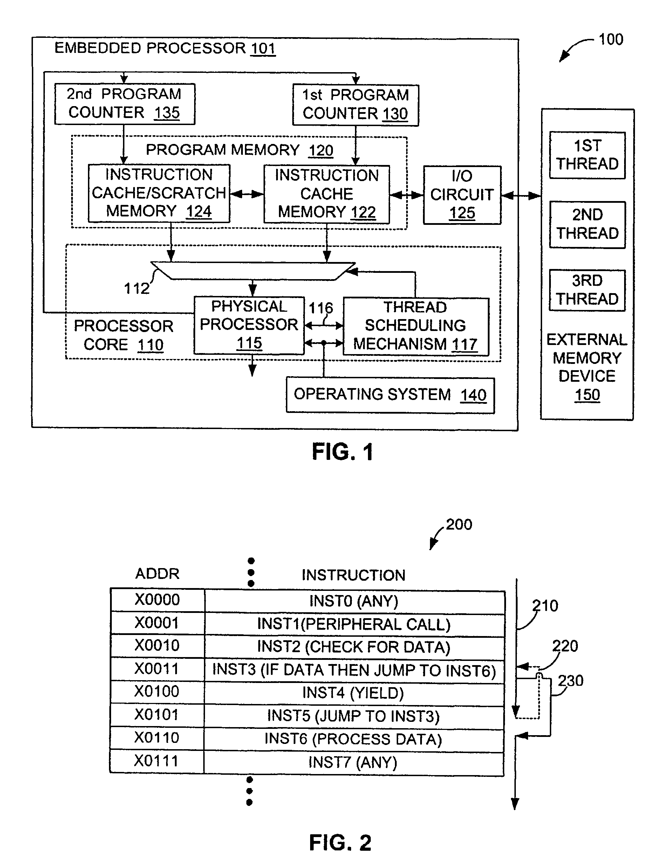

Fig. 1 is a simplified block diagram depicting portions of an MVP system 100 including a processor core 110, a program memory 120 for storing two or more threads (virtual processors), and program counters 130, 135 for fetching instructions from the program memory 120 and passing the fetched instructions to processor core 110 during execution of an associated thread. Although omitted for brevity, MVP system 100 also includes one or more additional circuit structures that are integrated in a System-On-Chip (SoC) arrangement. For example, a system memory interface (not shown) is typically utilized to interface between the respective memories and program counters.

Referring to the lower left portion of Fig. 1, processor core 110 includes a switching (multiplexing) circuit 112, a physical processor (i.e., processor "pipeline", or central processing unit (CPU)) 115, and a thread scheduling mechanism 117. Multiplexer 112 represents a switching circuit that facilitates the loading of instructions associated with a selected "task" (i.e., active) thread into physical processor 115 from program memory 120 in accordance with control signals generated by thread scheduling mechanism 117, which in turn are generated in response to physical processor 115 and/or an operating system program 140. For reasons described below, program memory 120 is separated into a (first) instruction cache memory region 122, and a second instruction cache/scratch region 124. Multiplexer 112 includes a first set of input terminals connected to receive instructions read from cache memory 122, a second set of input terminals connected to receive instructions read from cache/scratch memory 124, and a set of output terminal connected to an appropriate decode circuit associated with the physical processor 115. During execution of the first thread, physical processor 115 and/or operating system 140 cause thread scheduling mechanism 117 to generate a suitable control signal that causes multiplexer 112 to pass instruction signals associated with the first thread from cache memory 122. Conversely, during execution of the second thread, processor 115 and/or operating system 140 cause thread scheduling mechanism 117 to generate a suitable control signal that causes multiplexer 112 to pass instruction signals associated with the second thread from cache/scratch memory 124. Those skilled in the processor art will recognize that multiplexer 112 may be replaced with a number of alternative circuit arrangements.

Note that physical processor 115 and thread scheduling mechanism 117 are under the control of operating system 140 to execute "mechanical" thread switching operations (e.g., in response to a fetch miss or a scheduled (timed) thread switching regime) in the absence of YIELD instructions. As described in additional detail below, control signals are also transmitted from physical processor 115 to thread scheduling mechanism 117 via a bus 116, for example, in response to the execution of "YIELD" machine instructions (discussed below).

Similar to conventional program counter circuits, program counters 130 and 135 store instruction address values that are used to call (fetch) a next instruction during the execution of a thread. In particular, program counter 130 stores an instruction address value associated with the execution of the first thread, and transmits this instruction address value to cache memory 122. Conversely, program counter 135 stores an instruction address value associated with the execution of the second thread, and transmits this instruction address value to scratch memory 124. Those familiar with the operation of program counters will recognize that the respective instruction address values stored therein are controlled in part by the operation of processor core 110, and that a single program counter circuit may be utilized in place of separate program counters 130 and 135.

Similar to conventional processors, cache memories 122 and 124 (i.e., when memory portion 124 is implemented as cache memory) are used to temporarily store instructions associated with the first thread that are read from external memory device 150. That is, the first time an instruction of the first thread is called (i.e., its address appears in program counter 130), the instruction must be read from external memory device 150 via I/O circuit 125 and then loaded into processor core 110 (by way of multiplexer circuit 112), which requires a relatively long time to perform. During this initial loading process, the instruction is also stored in a selected memory location of cache 122. When the same instruction is subsequently called (i.e., its address appears a second time in program counter 130), the instruction is read from cache 122 in a relatively short amount of time (i.e., assuming its associated memory location has not been overwritten by another instruction).

According to an embodiment of the present invention, second cache/scratch (deterministic) memory 124 may either be a cache memory, similar to that described above, or a scratch (deterministic) memory that continuously stores all instructions associated with the second thread, thereby guaranteeing execution of the second thread when, for example, a blocking event occurs during execution of the first thread. The phrase "continuously stored" is used to indicate that, unlike instructions written to cache memory 130, instructions stored in the scratch memory (when used) are not subject to overwriting during system operation. In one embodiment, scratch memory 140 is a "write once, read many" type memory circuit in which instructions associated with the second thread are written during an initial "configuration" system operating phase (i.e., prior to thread execution), and characterized by storing the instructions associated with the second thread such that the instructions are physically addressed by program counter 125, and are physically located adjacent to processor core 110, whereby each instruction call associated with the execution of the pre-selected thread is perfectly deterministic (i.e., predictable) and is relatively low latency. Further details associated with the use of scratch (deterministic) memory to store the second thread are disclosed is co-owned and co-pending U.S. Patent application serial number 10/431,996, entitled "MULTI-THREADED EMBEDDED PROCESSOR USING DETERMINISTIC INSTRUCTION MEMORY TO GUARANTEE EXECUTION OF PRESELECTED THREADS DURING BLOCKING EVENTS", which is incorporated herein by reference in its entirety. Note that in other possible embodiments, portion 124 of program memory 120 may be a conventional cache-type memory that operates in a manner that is essentially identical to instruction cache portion 122. Hence memory portion 124 is alternatively referred to herein as "cache", "scratch", or "cache/scratch" memory. In yet another possible embodiment, external memory device 150 may be omitted, and data/instructions associated with the two or more threads may be stored in non-volatile memory fabricated with embedded processor 101 on a single substrate.

In accordance with an embodiment of the present invention, processor core 110, program memory 120, and program counters 130, 135 form part of an embedded processor 101 that is connected to an external memory device 150. The term "embedded processor" is utilized herein to mean a discretely packaged semiconductor device including processor core 110, whose purpose is to perform a specific function (i.e., as opposed to general purpose computing) within an electronic system. Instructions and data words associated with the specific function performed by embedded processor 101 are at least partially stored on inexpensive external memory device 150 (e.g., an EEPROM or flash memory device) that is accessed by embedded processor 101 during operation. In addition to the circuits shown in Fig. 1, embedded processor 101 may also include other circuits associated with performance of the specific (e.g., control) function performed within the electronic system, such as on-chip data memory, serial and/or parallel input/output (I/O) circuitry, timers, and interrupt controllers. Moreover, embedded processor 101 may be a system-on-chip (SoC) type device that includes one or more of a digital signal processor (DSP), an application specific integrated circuit (ASIC), and field programmable logic circuitry. Those of ordinary skill in the art will recognize that, as used herein, the term "embedded processor" is synonymous with the term "embedded controller", is also synonymous with some devices referred to as "microcontrollers".

In accordance with an aspect of the present invention, in addition to executing "mechanical" thread switching operations (discussed above), MVP system 100 facilitates user (software) controlled thread switching by providing a mechanism for removing a thread (virtual processor) from contention for physical processor 115 in response to a special machine instruction (referred to herein as a "YIELD" instruction) that is included in the removed thread. In addition, upon suspending execution of the removed thread, this mechanism transfers control of physical processor 115 to an otherwise idle thread that is identified by thread scheduling mechanism 117 according to a modified thread-scheduling regime. Accordingly, as set forth in detail below, the present invention the present invention provides a clean and efficient method for removing an executing thread from contention for physical processor 115, and allowing an otherwise idle thread selected by thread scheduling mechanism 117 to take exclusive control of physical processor 115. Note that the mechanism for switching threads in response to YIELD instructions is incorporated into various portions of processor core 110 (e.g., physical processor 115 and thread scheduling mechanism 117), and is described functionally herein. Those of ordinary skill in the art will recognize that the described functions associated with this thread switching mechanism may be implemented in many forms.

According to another aspect of the present invention, the special YIELD instruction is included in at least one of the threads stored in program memory 120 (or external memory 150). Similar to other instructions included in a particular thread, the special YIELD instruction is arranged such that it is processed at a predetermined point during thread execution. However, the YIELD instruction differs from other instructions in that is specifically interacts with associated mechanisms of MVP system 100 to trigger a thread change when the YIELD instruction is processed by physical processor 115 (i.e., when the YIELD instruction is fetched from program memory 120 and passed through the execution pipeline associated with physical processor 115). That is, upon processing a YIELD instruction during the execution of a selected task thread, the task thread surrenders control of physical processor 115 to an otherwise idle thread selected by thread scheduling mechanism 117. The YIELD instruction thus facilitates increased processor efficiency by allowing a user to trigger a thread change at a known stall point, and by allowing thread scheduling mechanism 117 to determine the most efficient replacement thread to execute when the thread change is triggered.

Fig. 2 is a simplified graphical representation depicting a portion of an exemplary thread 200, and illustrates how a user is able to utilize a YIELD instruction to trigger a thread change at a known stall point. Exemplary thread 200 includes multiple instructions, each instruction having an associated address that is used to fetch the associated instruction during execution of thread 200. The portion of thread 200 shown in Fig. 2 includes instructions associated with address values X0000 through X0111 (where "X" is used to indicate one or more most significant bits). When executed using MVP system 100 (Fig. 1), these instructions are processed in the manner depicted by the arrows provided on the right side of Fig. 2. For example, arrow 210 shows the execution of thread 200 beginning at instruction INST0 (address X0000). At instruction INST1, a peripheral call is performed in which physical processor 115 generates a request for data from a peripheral device. In this example, this peripheral call is assumed to generate a significant delay while the peripheral device generates and transmits the waited-for data. At instruction INST2, the physical processor determines whether the data has arrived from the peripheral device. Of course, the waited-for data is not available immediately after the peripheral call was generated, so control passes to instruction INST4. Instruction INST4 is a YIELD instruction that is strategically placed to trigger a thread change at this known stall point (i.e., the "wait" period generated by the peripheral call). As discussed above and in additional detail below, processing of the YIELD instruction causes thread 200 to suspend execution, and for an otherwise idle thread to be loaded and executed in physical processor 115. Thus, instead of tying up physical processor 115 during the otherwise lengthy wait for the waited-for data, physical processor 115 productively executes the otherwise idle thread. After a delay period determined by thread scheduling mechanism 117, thread 200 is eventually loaded and executed by physical processor 115. Note that the operating state information associated with thread 200 that is re-loaded into physical processor 115 will indicate that the last instruction executed was instruction INST4 (the YIELD instruction), and that execution must resume at instruction INST5. In this example, instruction INST5 is an unconditional branch that causes execution to jump back to instruction INST3 (as indicated by dashed arrow 220 shown on the right side of Fig. 2). Thus, instruction INST3 is executed for a second time after the delay period triggered by the YIELD instruction. If this delay period was long enough, then the waited-for data will have arrived from the peripheral device, and execution control will jump as indicated by arrow 230 to instruction INST6 (e.g., an operation for processing the waited-for data), and execution of thread 200 will proceed normally. Alternatively, if the waited-for data is not yet available, then processing of instruction INST3 will cause the YIELD instruction to be processed for a second time, thereby triggering another thread change, until the waited-for data is available. As illustrated by the example shown in Fig. 2, the present invention provides a clean and efficient method for removing a stalled thread from contention for physical processor 115 in MVP system 110, and allowing an otherwise idle thread selected by thread scheduling mechanism 117 to take exclusive control of physical processor 115 during this "wait" period.

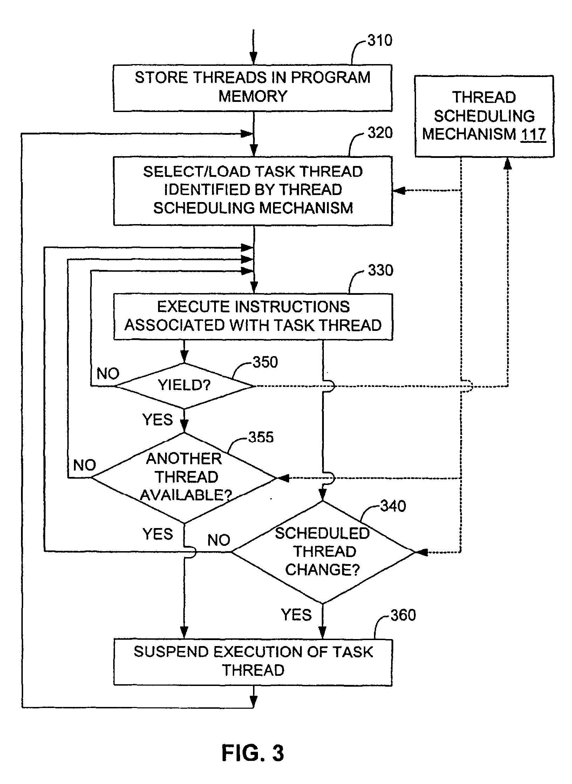

Fig. 3 is a flow diagram showing a process for operating MVP system 100 (Fig. 1) according to another embodiment of the present invention.

Operation of MVP system 100 begins by storing two or more threads in program memory 120 (block 310). In one embodiment, this thread storage process involves transferring thread instructions from non-volatile external memory 150 to volatile program memory 120. As mentioned above, according to an aspect of the present invention, at least one of the threads stored in program memory 120 (or read from external memory device 150) includes a YIELD instruction that is selectively positioned within the thread by the user in the manner described above with reference to Fig. 2.

Next, a pre-designated "boot" thread is selected from the threads stored in program memory 120 and loaded into physical processor 115 (Fig. 1) for execution (block 320). In one embodiment, the selected thread is identified by thread scheduling mechanism 117, and loaded from program memory 120 into physical processor 115 via multiplexing circuit 112 according to the techniques described above, thereby becoming the "task" (currently executing) thread (i.e., the virtual processor in control of physical processor 115).

As indicated below block 320, execution of the selected task thread then proceeds according to known techniques (i.e., instructions are systematically fetched from program memory 120 using an associated program counter 130 or 135, and transmitted via multiplexing circuit 112 into physical processor 115) until a thread change event occurs. According to another aspect of the present invention, thread changes can occur either by a scheduled thread change (block 340) or by processing of a YIELD instruction (block 355).

As discussed above, a scheduled thread change (block 340) is initiated by thread scheduling mechanism 117 (Fig. 1) according to a predefined scheduling regime. For example, when a round-robin regime is utilized, thread scheduling mechanism 117 may initiate a thread change after a predetermined time period has elapsed since execution of the first thread was initiated (provided a YIELD instruction was not processed in the interim). Alternatively, when a priority regime is utilized, thread scheduling mechanism 117 may initiate a thread change when another thread achieves a higher priority based on a predefined ranking schedule. When a scheduled thread change is initiated, execution of the current task the current thread is suspended (block 360), and a new task thread is selected and loaded (block 320).

Alternatively, according to the present invention, when a YIELD instruction included in the task thread is processed (block 350), then execution of the task thread is suspended before the scheduled thread change is encountered (i.e., the YIELD instruction "forces" a user-initiated thread change to occur before the normally-scheduled mechanical thread change). In one embodiment, upon encountering the thread change, physical processor 115 and/or thread scheduling mechanism 117 determine whether another thread is available for execution (block 355). This process may involve, for example, determining whether a currently idle thread has a higher priority than the currently executing task thread. If so, then execution of the task thread is suspended (i.e., processor settings are stored and processor pipeline instruction registers are "flushed"; block 360), and then a replacement thread is selected/loaded (block 320). However, if thread scheduling mechanism 117 fails to identify a higher ranking thread to replace the task thread, then execution of the task thread may continue (i.e., with physical processor 115 stalled).

According to yet another aspect of the present invention, upon processing a YIELD instruction and suspending execution of the current task thread (block 360), a replacement thread is selected by thread scheduling mechanism 117 based on a predefined scheduling regime and the processed YIELD instruction (block 320). In one embodiment, the ordering or ranking of thread execution based on the predefined schedule (e.g., round-robin regime) is modified to reflect the task thread from which the YIELD instruction was processed. For example, in a round-robin regime, when the YIELD instruction is processed from a first thread, the execution period allotted to the first thread is reduced (i.e., terminated immediately), and a second thread is initiated. Similarly, in a priority regime, when the YIELD instruction is processed from a first thread, the rank of the first thread is reduced by a predetermined amount. Those of ordinary skill in the art will recognize that several thread schedule modification schemes can be implemented to re-schedule the thread from which a YIELD instruction is processed. Therefore, the specific examples mentioned above are intended to be exemplary, and not limiting.

Finally, after selecting the replacement (second) thread (block 320), execution of the replacement thread is initiated by loading the operating state information and instructions associated with the second thread (block 330). At this point the second thread becomes the task thread, and the process continues (i.e., the second thread is executed until either a scheduled thread change or a processed YIELD instruction cause suspension of the second thread, and loading/execution of another thread).

Figs. 4(A) and 4(B) are timing diagrams illustrating an exemplary system operation utilizing the methods described above. Similar to the example described above with reference to Figs. 5(A) and 5(B), the example assumes a round-robin scheduling regime, where Fig. 4(A) shows the activity of a first virtual processor and Fig. 4(B) shows the activity of a second virtual processor. In these figures, periods during which a virtual processor is executed (i.e., in control of physical processor 115, which is shown in Fig. 1) are indicated by raised cross-hatching, and periods of inactive (i.e., when the virtual processors are "idle") are indicated using flat lines. According to this example, the second virtual processor is loaded and executed at time t0, and continues executing between times t0 and t1 (Fig. 4(B)). Note that the first virtual processor is idle during this period (as shown in Fig. 4(A)). As shown in Fig. 4(B)), at time t1, execution of the second virtual processor is suspended due to a scheduled thread change (i.e., the time period allotted to the second thread is expired), and the second thread is removed from physical processor 115. Referring to Fig. 5(A), at the same time the first thread is loaded and executed. Execution of the first thread then proceeds until time t2, when a peripheral call and YIELD instruction are processed (as described above with reference to Fig. 2). Unlike the conventional case shown in Fig. 5(A), execution of the YIELD instruction triggers a thread change at time t2 (i.e., suspending execution of the first thread and loading/execution of the second thread). Thus, unlike the conventional process where physical processor 115 is unproductive (i.e., stalled) between times t2 and t3, the present invention facilitates efficient use of physical processor 115 by forcing a thread change to the second thread during this otherwise unproductive period. As indicated in Fig. 4(B), upon completing the allotted execution time (i.e., at time t4a), the second thread is again suspended, and control of physical processor 115 returns to the first thread (as indicated in Fig. 4(A)). Note that processing of the first thread then proceeds efficiently because the data associated with the peripheral call is available at time t3, which is well before execution of the first thread is resumed.

The example provided above utilizes a simplified form of YIELD instruction that omits input operands used to identify a hardware signal on which the thread intends to wait (i.e., a signal indicating that the data associated with the peripheral call is available), and it also omits a result operand (i.e., a signal indicating the reason for reactivation). Thus, the YIELD instruction described above assumes that all execution suspensions ("waits") are "soft" (i.e., temporary, voluntary relinquishing of processor control to give other threads a chance to execute). In such systems, if control returns to the first processor before the peripheral call is completed, then the YIELD instruction can be arranged to process repeatedly (i.e., cause repeated thread switches) until the data associated with the peripheral call is available and execution of the first thread can continue.

In addition to the "soft" form of YIELD instruction (described above), other forms may be utilized that vary depending on the nature and requirements of the MVP system in which the YIELD instruction is implemented. In one alternative embodiment, a YIELD instruction includes an input operand that identifies the hardware signal on which the issuing thread intends to wait, and/or a result operand indicating the reason for reactivation). The input operand may be used to prevent resuming execution of a suspended thread before the waited for condition (e.g., peripheral call data) is available. When the thread is subsequently reactivated after executing of a YIELD instruction, the result operand can indicate the reason for reactivation. A zero result, for example, can indicate that reactivation is not due to the occurrence of a specific hardware signal, but rather that the hardware scheduler has reactivated the thread because it is once again that thread's turn to execute (in a round-robin scheduling regime), or because there is no higher priority thread that is ready to execute (in a priority scheduling regime). This result operand feature makes it possible to implement both "hard" and "soft" waits without requiring more than one form of YIELD instruction. Unlike a "soft" wait, a "hard" wait requires a specific hardware signal to end the wait. The result operand allows a single YIELD instruction, defined with soft wait semantics, to be used for hard waits as well. The issuing code simply tests the result from the YIELD instruction, and loops back to the YIELD instruction if it does not find the hardware signal indication for which it is looking.

As set forth above, the present invention provides a YIELD machine instruction and modified MVP processor that provide enhanced MVP system control by causing an active thread (virtual processor) to "voluntarily" surrender control to an otherwise idle thread (virtual processor) upon processing the YIELD instruction. Unlike mechanical or system-based thread switching methods that are controlled solely by a scheduling regime (e.g., limiting execution of each thread to a specified time), the use of YIELD instructions allows a user to trigger thread changes at anticipated stall points to facilitate efficient use of the physical processor.

The embodiments of the structures and methods of this invention that are described above are illustrative only of the principles of this invention and are not intended to limit the scope of the invention to the particular embodiments described. Thus, the invention is limited only by the following claims.

## Claims

1. A method for operating a multiple virtual processor system, the multiple virtual processor system including a program memory, a thread scheduling mechanism, and a physical processor, the method comprising:
storing a plurality of threads in the program memory, wherein a first thread of the plurality of threads comprises a plurality of first instructions including a YIELD instruction;
executing the first thread by systematically passing the first instructions from the program memory to the physical processor, and causing the physical processor to process the first instructions;
suspending execution of the first thread when the YIELD instruction is processed by the physical processor;
identifying a second thread from the plurality of threads for execution by the physical processor, wherein the second thread is selected by the thread scheduling mechanism based on a predefined schedule and the processed YIELD instruction; and
executing the second thread by systematically passing second instructions associated with the second thread from the program memory to the physical processor, and causing the physical processor to process the second instructions.

2. The method according to Claim 1, wherein the program memory comprises a volatile memory device, and wherein storing the plurality of threads comprises writing the plurality of threads from a non-volatile memory device into the program memory.

3. The method according to Claim 2, wherein the MVP system comprises a first discretely packaged semiconductor device, and the non-volatile memory device comprises a second discretely packaged semiconductor device, and wherein writing the plurality of threads comprises transmitting data between the first and second discretely packaged semiconductor devices during operation of the MVP system.

4. The method according to Claim 1, wherein a portion of the program memory comprises a deterministic memory for continuously storing a pre-selected thread of the plurality of threads, and wherein storing the plurality of threads includes writing all instructions associated with the pre-selected thread into the deterministic memory during a system initialization period.

5. The method according to Claim 1, wherein the first thread includes operating state information that is loaded into the physical processor before executing the first thread.

6. The method according to Claim 1,
wherein executing the first thread comprises fetching the first instructions from the program memory using a first program counter, and
wherein executing the second thread comprises fetching the second instructions from the program memory using a second program counter.

7. The method according to Claim 1, wherein executing the first thread comprises selecting the first thread from the plurality of threads based on the predefined schedule.

8. The method according to Claim 1, further comprising:
suspending execution of the second thread based on the predefined schedule; and
resuming execution of the first thread.

9. The method according to Claim 1, wherein suspending execution of the first thread further comprises determining whether the second thread is available for execution.

10. A multiple virtual processor (MVP) system comprising:
a program memory for storing a plurality of threads; and
a processor core coupled to the program memory, the processor core including:
a thread scheduling mechanism for scheduling the execution of a first thread and a second thread based on a predetermined schedule,
a physical processor for processing instructions associated with a selected thread of the first and second threads, and
switching means for passing instructions associated with the selected thread from the program memory to the physical processor,
wherein the first thread includes a YIELD machine instruction,
wherein the processor core comprises means for notifying the thread scheduling mechanism when the YIELD machine instruction is processed by the physical processor during execution of the first thread, and
wherein the thread scheduling mechanism includes means for suspending execution of the first thread and for initiating execution of the second thread by the physical processor based on the predefined schedule and the processed YIELD instruction.

11. The MVP system according to Claim 10, wherein the program memory comprises a volatile memory device, and wherein storing the plurality of threads comprises writing the plurality of threads from a non-volatile memory device into the program memory.

12. The MVP system according to Claim 11, wherein the MVP system comprises a first discretely packaged semiconductor device, and the non-volatile memory device comprises a second discretely packaged semiconductor device.

13. The MVP system to Claim 10, wherein a portion of the program memory comprises a deterministic memory for continuously storing all instructions associated with a pre-selected thread of the plurality of threads.

14. The MVP system according to Claim 10, wherein the first thread includes operating state information that is loaded into the physical processor before executing the first thread.

15. The MVP system according to Claim 10, further comprising:
a first program counter for fetching the first instructions from the program memory during execution of the first thread; and
a second program counter for fetching second instructions associated with the second thread from the program memory during execution of the second thread.

16. The MVP system according to Claim 10, wherein the thread scheduling mechanism further comprises means for determining an availability of the second thread for execution by the physical processor before initiating execution of the second thread.

17. A multiple virtual processor system including a program memory, a thread scheduling mechanism, and a physical processor, the multiple virtual processor system also comprising:
means for storing a plurality of threads in the program memory, the plurality of threads including a first thread comprising a plurality of first instructions including a YIELD instruction;
means for executing the first thread by systematically passing the first instructions from the program memory to the physical processor, and causing the physical processor to process the first instructions;
means for determining when the YIELD instruction is processed by the physical processor;
means for suspending execution of the first thread upon determining that the YIELD instruction has been processed by the physical processor; and
means for identifying and executing a second thread from the plurality of threads using the physical processor, wherein the second thread is selected based on a predefined schedule and the processed YIELD instruction.

18. The MVP system according to Claim 17, wherein the first thread includes operating state information, and wherein the MVP system further comprises means for loading the operating state information into the physical processor before executing the first thread.

19. The MVP system according to Claim 17, further comprising:
a first program counter for fetching the first instructions from the program memory during execution of the first thread; and
a second program counter for fetching second instructions associated with the second thread from the program memory during execution of the second thread.

20. The MVP system according to Claim 17, further comprising means for determining an availability of the second thread for execution by the physical processor before initiating execution of the second thread.
